Europäisches Patentamt

(19) European Patent Office

Office européen des brevets

(11) Veröffentlichungsnummer: **0 053 284**
**B1**

(12) **EUROPÄISCHE PATENTSCHRIFT**

(45) Veröffentlichungstag der Patentschrift:
02.05.85

(51) Int. Cl.⁴: **B 62 D 1/18**

(21) Anmeldenummer: **81109082.8**

(22) Anmeldetag: **28.10.81**

(54) **Sicherheitslenksäule für Automobile.**

(30) Priorität: **29.11.80 DE 3045141**

(43) Veröffentlichungstag der Anmeldung:
**09.06.82 Patentblatt 82/23**

(45) Bekanntmachung des Hinweises auf die Patenterteilung:
**02.05.85 Patentblatt 85/18**

(84) Benannte Vertragsstaaten:
**FR GB IT**

(56) Entgegenhaltungen:
**DE - A - 2 210 809**
**DE - A - 2 918 280**
**DE - B - 1 298 010**
**FR - A - 1 020 948**

(73) Patentinhaber: **Messerschmitt-Bölkow-Blohm**
**Gesellschaft mit beschränkter Haftung,**
**Robert-Koch-Strasse, D-8012 Ottobrunn (DE)**

(72) Erfinder: **Bongers, Bernd, Dipl.-Ing., Nelkenweg 2,**
**D-8011 Kirchheim (DE)**
Erfinder: **Brand, Konrad, Ing. grad, Mesnerstrasse 3,**
**D-8011 Höhenkirchen (DE)**

## Beschreibung

Die Erfindung bezieht sich auf eine Sicherheitslenksäule für Kraftfahrzeuge gemäss dem Oberbegriff des Patentanspruches 1.

Derartige Sicherheitslenksäulen müssen so gestaltet werden, dass sie die beim Fahrbetrieb des Kraftfahrzeuges auftretenden Torsionsmomente möglichst verwindungsarm übertragen, sich bei einem Aufprallunfall jedoch in Längsrichtung verformen können. Die von der Sicherheitslenksäule bei der Verformung aufgenommene Arbeit muss im Anfangsbereich der Verformung reversibel zurückgegeben werden, wobei die Lenksäule funktionsfähig bleiben muss. Erst bei grösser werdender Längsverformung, etwa bei einem Aufprallunfall mit höherer und für den Fahrer des Kraftfahrzeuges gefährlicher Geschwindigkeit darf die Lenksäule brechen. Um den Sicherheitsanforderungen zu genügen, müssen die Torsions-, Elastizitäts- und Brucheigenschaften der Sicherheitslenksäule innerhalb sehr geringer Toleranzen reproduzierbar sein.

Aus Bussien, Automobiltechnisches Handbuch, Ergänzungsband zur 18. Auflage, Verlag Walter de Gruyter, Berlin, 1979, Seiten 642 bis 645, ist eine Sicherheitslenksäule bekannt, die in einem Verformungsbereich aus einem metallischen Gitterrohr besteht; vgl. insbesondere Bild 37 auf Seite 644. Ein solches Gitterrohr wird dadurch hergestellt, dass ein Blech ausgestanzt und anschliessend zu einem Rohr geformt und verschweisst wird. Die Fertigung erfordert hohe Genauigkeit, wenn die obigen Eigenschaften mit geringen Toleranzen reproduzierbar eingehalten werden sollen. Ausserdem haben selbst Gitterrohre ein relativ hohes Gewicht, damit die bei Lenkbewegungen auftretenden Torsionskräfte verwindungsarm übertragen werden können.

Aus der DE-AS 1 298 010 ist eine Sicherheitslenksäule bekannt, die in dem verformbaren Bereich aus zwei gegensinnig schraubenförmig gewickelten Stahlblechbändern aufgebaut ist, wobei die Stahlblechbänder an den Kreuzungspunkten miteinander z.B. durch Punktschweissung verbunden sind. Auch wenn diese Sicherheitshülse aus den Stahlblechbändern ein geringeres Gewicht aufweist als Sicherheitshülsen aus Gitterrohren, so verbleibt doch der Nachteil, dass die Eigenschaften der Sicherheitshülse hinsichtlich Torsion, Elastizität und Bruch nicht eindeutig, d.h. mit sehr geringen Toleranzen reproduzierbar sind. So können z.B. die einzelnen Punktschweissverbindungen kaum reproduzierbar gestaltet werden; ausserdem wird hierbei das Material der Stahlblechbänder selbst verändert.

Aus der DE-A1 2 918 280 ist eine Stossdämpfungseinrichtung aus faserverstärkten Werkstoffen bekannt, die z.B. zum Abstützen von Flugzeugsitzen und Flugzeugfahrgestellen dient und die bei einem Hochgeschwindigkeitsaufprall die dabei auftretende Energie durch Bruch absorbieren soll. Die Hülse ist ein vollwandiger Zylinder, der aus harzgetränkten Fasern bzw. Fasersträngen aus Graphit, Glas, Bor oder Aramid gewickelt ist. Diese Stossdämpfungseinrichtung ist nur auf Längsbelastungen eingerichtet. Eine Verwendung einer solchen Stossdämpfungseinrichtung als Sicherheitshülse innerhalb einer Sicherheitslenksäule bei Kraftfahrzeugen ist kaum möglich, da die hierfür notwendigen Festigkeitseigenschaften hinsichtlich Längs- und Drehstabilität nicht oder nur unzureichend aufeinander abgestimmt werden können.

Der Erfindung liegt die Aufgabe zugrunde, eine Sicherheitslenksäule mit einer als Gitterrohr ausgebildeten Sicherheitshülse anzugeben, die einfach zu fertigen ist und deren Eigenschaften hinsichtlich Dreh- und Längsstabilität einfach und reproduzierbar genau erfüllt werden können.

Diese Aufgabe ist gemäss der Erfindung durch die im kennzeichnenden Teil des Patentanspruchs 1 angegebenen Merkmale gelöst.

Demgemäss wird die Sicherheitshülse aus harzgetränkten Fastersträngen gewickelt, die bereits die Breite der Gitterstränge des Gitterrohres aufweisen. An den Kreuzungspunkten der Gitterstränge überlappen sich die Faserstränge jeweils abwechselnd, so dass die sich kreuzenden Faserstränge quasi miteinander verzahnt sind, wobei die Festigkeitseigenschaften dieser Verbindung durch Verzahnung wegen der sich ausbildenden Bindemittelmatrix mit den eingelagerten Fasern in allen Kreuzungsbereichen gleich und reproduzierbar sind.

Diese Ausbildung der Sicherheitshülse bietet auch den Vorteil, dass die Elastizitäts- und Brucheigenschaften der Sicherheitshülse in weiten Bereichen variiert werden können und zwar im wesentlichen durch die Anzahl der Faserstranglagen bei den einzelnen Gittersträngen, durch die Wahl der Breite und Dicke der gewickelten Faserstränge sowie durch den Orientierungswinkel, den die gewickelten Gitterstränge gegenüber der Längsachse der Sicherheitshülse einnehmen.

Die Orientierung der auf einem Dorn aufgewickelten Faserstränge ist im Grunde frei wählbar, wird sinnvollerweise aber so gewählt, dass bei einer optimalen Torsionssteifigkeit und Torsionsfestigkeit eine möglichst niedrige Längssteifigkeit und Längsfestigkeit der Sicherheitshülse erreicht wird. Dieses Optimum liegt bei einem Orientierungswinkel von ±45°, weil nur dann die einzelnen Gitterstränge zwischen den Kreuzungspunkten bei Torsion auf Zug und Druck, bei einer Längskraft aber auf Biegung und Scherung beansprucht werden. Bei Torsionskräften hat die Sicherheitshülse demnach eine hohe, bei Längskräften eine niedrige Steifigkeit.

Bei einer Abweichung des Orientierungswinkels von ±45° um einige Grad, maximal um ca. 10°, kann die Steifigkeit bei Längskräften unter Umständen noch gesenkt werden, ohne dass die Torsionssteifigkeit wesentlich geringer wird. Aus diesen Gründen kann im Einzelfalle eine solche Abweichung vom Orientierungswinkel von ±45° sinnvoll sein.

Die Festigkeit sowie auch die Steifigkeit der einzelnen Gitterstränge ist bei Belastung in Längsrichtung sehr viel grösser als bei Biegebelastung, wo das Aufbrechen der Gitterstränge durch interlaminaren Schubbruch ausgelöst wird. Diese Tendenz zum gewünschten Versagen in Längsrichtung kann dadurch erhöht werden, dass bei einer offenen Netzwicklung der Sicherheitshülse die Schubflächen zwischen den in +45°-Orientierung und den in −45°-Orientierung verlaufenden Gittersträngen stark vermindert werden und somit an den Kreuzungspunkten bei Längsbelastung der Sicherheitshülse das gewünschte frühzeitige Versagen eintritt.

Das Verhältnis von Höhe und Breite der einzelnen Gitterstränge kann an die gewünschten Anforderungen z.B. durch Wahl von Fasersträngen mit verschiedener Breite in Kombination mit der Zahl der Wickellagen variieren. Auch mit dieser Möglichkeit kann die Längssteifigkeit der Sicherheitshülse verändert werden, ohne dass die Torsionssteifigkeit bzw. Festigkeit allzu stark beeinflusst wird, da die Längsfestigkeit der einzelnen Gitterstränge auf Zug und Druck nur von deren Querschnitt abhängig, d.h. unabhängig vom Verhältnis Höhe zu Breite ist.

Die Sicherheitshülse kann z.B. einen kreisförmigen Querschnitt aufweisen, d.h. die einzelnen Faserstränge werden auf einen runden Dorn aufgewickelt. Die einzelnen Gitterstränge der Sicherheitshülse sind in diesem Falle leicht gekrümmt, so dass die Torsionsbelastungen nicht nur in Längsrichtung der einzelnen Gitterstränge verlaufen, sondern auch eine Komponente senkrecht zu den Gitterstäben aufweisen. Um bei extremen Torsionsbelastungen ein Knicken einzelner Gitterstränge zu vermeiden, können diese bei der Wicklung entsprechend dimensioniert sein.

Vorzugsweise wird die Sicherheitshülse jedoch auf einem Dorn mit dem Querschnitt eines regelmässigen Polygons gewickelt, so dass auch die Sicherheitshülse den Querschnitt eines regelmässigen Polygons aufweist. Die Faserstränge werden bei der Wicklung so abgelegt, dass die Kreuzungspunkte auf den Kanten des Dornes liegen, das heisst bei der fertigen Sicherheitshülse auf den Polygonkanten liegen. Bei einer derartig gewickelten Sicherheitshülse sind die einzelnen Gitterstränge zwischen zwei Kreuzungspunkten gerade Stäbe, die bei Torsionsbelastung annähernd ausschliesslich in der Längsachse beansprucht werden und erst bei wesentlich höheren Torsionsbelastungen knickgefährdet sind als die leichgekrümmten Gitterstäbe einer Sicherheitshülse mit kreisförmigem Querschnitt.

Die Erfindung ist in zwei Ausführungsbeispielen anhand der Zeichnung näher erläutert. In der Zeichnung stellen dar:

Figur 1 eine schematische Darstellung einer Sicherheitslenksäule gemäss der Erfindung mit einer einen Teil der Lenksäule bildenden Sicherheitshülse aus faserverstärktem Kunststoff;

Figur 2 eine erste Ausführungsform einer Sicherheitshülse aus faserverstärktem Kunststoff für eine Sicherheitslenksäule gemäss der Erfindung;

Figur 3 eine zweite Ausführungsform einer Sicherheitshülse aus faserverstärktem Kunststoff für eine Sicherheitslenksäule gemäss der Erfindung;

Figur 4 einen Teil einer Abwicklung der Wand einer Sicherheitshülse gemäss der Erfindung;

Figuren 5A u. 5B jeweils einen Querschnitt entsprechend den Linien V–V in Figur 4;

Figuren 6A u. 6B jeweils einen Querschnitt längs den Linien VI–VI in Figur 4.

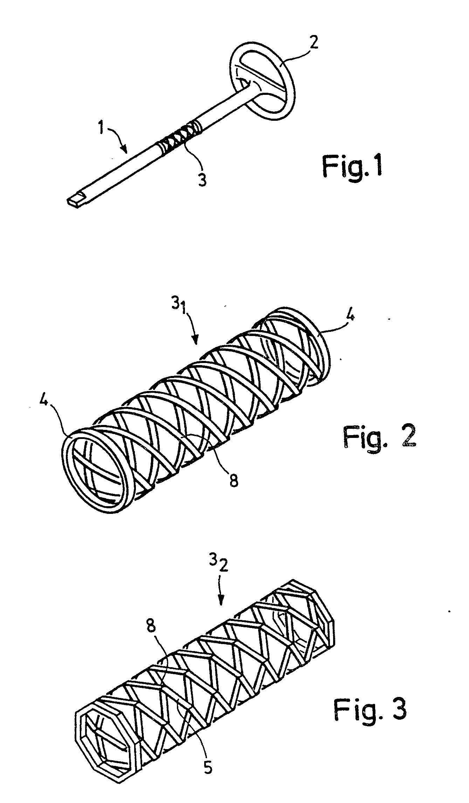

In Figur 1 ist schematisch ein Teil einer Lenkeinrichtung eines Automobiles dargestellt. Die Lenkeinrichtung besteht aus einer Sicherheitslenksäule 1, dessen oberes Ende mit einem Handlenkrad 2 verbunden ist und dessen unteres Ende in ein nicht dargestelltes Lenkgetriebe reicht. Die Lenksäule weist etwa in ihrem mittleren Bereich eine als Gitterrohr ausgebildete Sicherheitshülse 3 aus faserverstärktem Kunststoff auf. Die übrigen Teile der Lenksäule sind von herkömmlicher Bauart und mit hier nicht dargestellten Mitteln mit der Sicherheitshülse 3 koaxial verbunden.

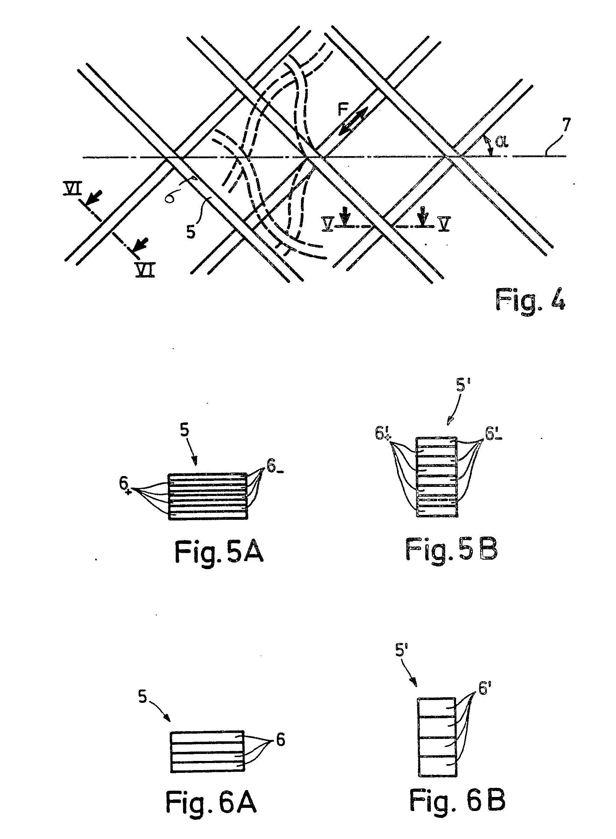

In Figur 2 ist eine Sicherheitshülse $3_1$ mit kreisförmigem Querschnitt dargestellt. Die Sicherheitshülse wird dadurch hergestellt, dass mit einem Kunstharz-Bindemittel getränkte Faserstränge bzw. Rovings auf einen im Querschnitt kreisförmigen Wickeldorn nach bekannten Techniken aufgewickelt werden. Die beiden Endseiten der Sicherheitshülse sind mit einem durchgehenden Rand 4 aus faserverstärktem Kunststoff versehen, zwischen denen sich eine offene netzförmige Struktur in Form eines Gitterrohres erstreckt. Dieses Gitterrohr entspricht einem Mehrfach-Wickelmuster ohne Fortschrittsgrad. In Figur 4 ist eine Abwicklung eines Teiles des Gitterrohrmusters aus sich überkreuzenden Fasersträngen dargestellt. Die Elemente des Gitterrohrs zwischen jeweils zwei Kreuzungspunkten werden mit Gitterstränge 5 bezeichnet. Aus den Figuren 6A und 6B ist zu entnehmen, dass jeder Gitterstrang aus mehreren, in diesem Falle vier Lagen von flachen getränkten Fasersträngen 6 zusammengesetzt ist. Entsprechend den Sicherheitsanforderungen kann die Längssteifigkeit der Sicherheitshülse und damit der Sicherheitslenksäule durch Variation des Querschnittes der Gitterstränge variiert werden, ohne dass dadurch wesentlich die Torsionssteifigkeit der Sicherheitshülse beeinflusst wird. Gemäss Figur 6A sind die Gitterstränge 5 aus vier Lagen flacher Faserstränge 6, gemäss Figur 6B die Gitterstränge 5' aus ebenfalls vier Lagen verhältnismässig schmaler, jedoch starker Faserstränge 6' zusammengesetzt.

Wie aus Figur 4 hervorgeht, verläuft eine Hälfte der Gitterstränge 5 unter einem Winkel α von +45° in bezug zu der Längsachse 7 der Sicherheitshülse, während die andere Hälfte der Gitterstränge unter einem Winkel von −45° zur Längsachse 7 verläuft. An den Kreuzungspunkten 8 der Gitterstränge mit positiver Winkelorientierung und der Gitterstränge mit negativer Winkelorientierung sind die Sicherheitshülsen so gewickelt, dass die in den Figuren 5A und 5B mit $6_+$ bezeichneten Faserstränge der Gitterstränge 5 mit positiver Orientierung mit den mit den Bezugszeichen 6_ bezeichneten Fasersträngen der Gitterstränge mit negativer Winkelorientierung abwechseln. Auch an den Kreuzungspunkten kann die Steifigkeit der Sicherheitshülse und damit der Sicherheitslenksäule durch Anzahl der Lagen und den Querschnitt der Faserstränge beeinflusst werden. Gemäss Figur 5A werden für die Gitterstränge jeweils vier flache, jedoch verhältnismässig breite Faserstränge 6 verwendet, gemäss Figur 5B ebenfalls für jeden Gitterstrang vier, jedoch verhältnismässig schmale und dicke Faserstränge 6'verwendet. Bei der Ausführung gemäss Figur 5A ergibt sich demnach eine verhältnismässig grosse Schubfläche, bei der Ausführungsform gemäss Figur 5B eine relativ kleine Schubfläche, die in dieser Figur gestrichelt dargestellt ist.

In Figur 3 ist eine zweite Ausführungsform einer Sicherheitshülse $3_2$ dargestellt, die einen Querschnitt eines regelmässigen Achteckes aufweist. Die Sicherheitshülse ist aus Fasersträngen auf einen Dorn mit ebenfalls achteckigem Querschnitt gewickelt, und zwar derart, dass die Kreuzungspunkte der Gitterstränge 5 auf die Kanten des Dornes zu liegen kommen. Bei der fertigen Sicherheitshülse liegen dann die Kreuzungspunkte 8 der Gitterstränge jeweils auf einer Linie, die einer Kante der mehreckigen Hülse entspricht. Die Gitterstränge zwischen jeweils zwei benachbarten Kreuzungspunkten sind gerade und sämtlich in einer Ebene verlaufende Stäbe.

In Figur 4 ist die bei normalem Betrieb der Längssäule auftretende Belastungskraft F dargestellt, die in Längsrichtung der Gitterstränge wirkt. Bei dem Ausführungsbeispiel gemäss der Figur 3 bleibt diese Belastungskraft annähernd erhalten, so dass sie ebenfalls in der Längsachse der geraden Gitterstränge liegt. Bei dem Ausführungsbeispiel gemäss Figur 2 hat die Kraft F aufgrund des leicht gekrümmten Verlaufes der Gitterstränge 5 noch eine Komponente senkrecht zu der Längsachse der Gitterstränge.

In Figur 4 ist gestrichelt für einige Gitterstränge deren Verformung bei einem Aufprallunfall des Automobils dargestellt.

Eine Sicherheitslenksäule gemäss der Erfindung kann durch entsprechende Konstruktion aus faserverstärktem Kunststoff und entsprechende Dimensionierung an die für jeden speziellen Fall gewünschten Sicherheitsanforderungen angepasst werden. Die Herstellung einer Lenksäule gemäss der Erfindung ist einfach und kostengünstig; ausserdem hat die Lenksäule aufgrund des verwendeten Werkstoffes nur ein geringes Gewicht.

**Patentansprüche**

1. Sicherheitslenksäule (1) für Kraftfahrzeuge, die sich bei einem Aufprallunfall unter Einwirkung einer vorbestimmten Kraft verkürzt und zumindest in dem sich verkürzenden Bereich aus einer als Gitterrohr ausgebildeten Sicherheitshülse (3) besteht, dadurch gekennzeichnet, dass die Sicherheitshülse (3) ein Wickelkörper aus faserverstärktem Kunststoff ist, dessen Gitterstränge (5) aus in kreuzweisen Lagen übereinander gewickelten kunststoffgetränkten Fasersträngen (6) bestehen, und dass im Bereich der Kreuzungspunkte (8) zweier Gitterstränge deren Faserstränge ($6_+$ und $6_-$) abwechselnd übereinanderliegen.

2. Sicherheitslenksäule nach Anspruch 1, dadurch gekennzeichnet, dass der Orientierungswinkel ($\alpha$) der Gitterstränge (5) gegenüber der Längsachse (3) ca. ±45° beträgt.

3. Sicherheitslenksäule nach Anspruch 1 oder 2, dadurch gekennzeichnet, dass die Sicherheitshülse ($3_2$) den Querschnitt eines regelmässigen Polygons aufweist, und dass die Kreuzungspunkte (8) der Gitterstränge (5) jeweils auf den Kanten des Polygons der Sicherheitshülse (3) liegen.

**Revendications**

1. Colonne de direction de sécurité (1) pour véhicules automobiles qui se raccourcit sous l'action d'une force prédéterminée lors d'un accident par impact et est composée, au moins dans la zone de raccourcissement, d'un manchon de sécurité (3) établi en tube grillagé, caractérisée par le fait que le manchon de sécurité (3) est un corps bobiné en matière plastique renforcée de fibres dont les barreaux de grillage (5) sont composés de cordons de fibres imprégnés de matière plastique bobinés les uns au-dessus des autres en couches croisées et que, dans la zone des points de croisement (8) de deux barreaux de grillage, les cordons de fibres ($6_+$ et $6_-$) de ceux-ci sont superposés en alternance.

2. Colonne de direction de sécurité selon la revendication 1 caractérisée par le fait que l'angle d'orientation ($\alpha$) des barreaux de grillage (5) par rapport à l'axe longitudinal (3) est d'environ ±45°.

3. Colonne de direction de sécurité selon la revendication 1 ou 2 caractérisée par le fait que le manchon de sécurité ($3_2$) présente la section d'un polygone régulier et que les points de croisement des barreaux de grillage sont placés chaque fois sur les arêtes du polygone dudit manchon de sécurité (3).

**Claims**

1. A safety steering column (1), for motor vehicles, which shortens upon an impact accident under the effect of a predetermined force and, at least in the shortening region, consists of a safety sleeve (3) which is designed as a lattice tube, characterised in that the safety sleeve (3) is a wound body made from fibre-reinforced plastics material of which the lattice strands (5) consist of plastics-impregnated fibre strands (6) wound one above the other in crosswise layers, and in that in the region of the points of intersection (8) of two lattice strands the fibre strands ($6_+$ and $6_-$) thereof lie alternately one above the other.

2. A safety steering column according to claim 1, characterised in that the angle of orientation ($\alpha$) of the lattice strands (5) relative to the longitudinal axis (3) amounts to about $\pm 45°$.

3. A safety steering column according to claim 1 or 2, characterised in that the safety sleeve ($3_2$) has the cross-section of a regular polygon, and in that the points of intersection (8) of the lattice strands (5) in each case lie on the edges of the polygon of the safety sleeve (3).

Fig. 1

Fig. 2

Fig. 3

Fig. 4

Fig. 5A

Fig. 5B

Fig. 6A

Fig. 6B